# EUROPEAN PATENT APPLICATION

(11) **EP 4 456 202 A1**
(43) Date of publication of application: **30.10.2024**
(21) Application number: 23747419.2
(22) Date of filing: 30.01.2023
(51) Int. Cl.: H01M 4/66, H01M 4/04, H01M 4/62, H01M 10/052, H01M 4/02

(54) **ELECTRODE AND ELECTROCHEMICAL DEVICE COMPRISING SAME**

(30) Priority: 28.01.2022 KR 20220013755; 14.03.2022 KR 20220031453
(71) Applicant: LG Energy Solution, Ltd., Seoul 07335 (KR)
(72) Inventor: KIM, Hak-Yoon, Daejeon 34122 (KR); LIM, Chang-Yoon, Daejeon 34122 (KR); KANG, Hyeon-Jeong, Daejeon 34122 (KR); PARK, Moon-Soo, Daejeon 34122 (KR)
(74) Representative: Plasseraud IP
(86) International application number: PCT/KR2023/001368
(87) International publication number: WO 2023/146378

(57) **Abstract**

The present disclosure relates to an electrode and an electrochemical device comprising the same, and the electrode of the present disclosure comprises a current collector; a primer layer on all or some of at least one surface of the current collector; and an electrode active material layer on the current collector comprising the primer layer, wherein the electrode active material layer comprises granules, the primer layer comprises a binder and a conductive material, and a sum of amounts of the binder and the conductive material is 90 weight% or more based on a total weight of the primer layer.

## Description

### TECHNICAL FIELD

The present disclosure relates to an electrode and an electrochemical device comprising the same.

The present application claims the benefit of Korean Patent Application No. 10-2022-0013755 filed on January 28, 2022 and Korean Patent Application No. 10-2022-0031453 filed on March 14, 2022 with the Korean Intellectual Property Office, the disclosure of which is incorporated herein by reference in its entirety.

### BACKGROUND ART

Due to the increasing use of fossil fuels, there is a growing demand for the use of alternative energy and clean energy, and many studies are being made in the field of energy generation and storage using electrochemistry. A typical example of electrochemical devices using electrical and chemical energy is secondary batteries, and the range of application of secondary batteries is gradually expanding. Among secondary batteries, typically, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid.

The process of manufacturing a lithium secondary battery is largely classified into three steps, i.e., an electrode manufacturing process, an electrode assembly manufacturing process and a formation process. The electrode manufacturing process is sub-classified into an electrode mixture mixing process, an electrode coating process, a drying process, a rolling process, a slitting process and a winding process. Among them, the electrode mixture mixing process is a process of mixing the components for forming an electrode active layer in which electrochemical reaction actually occurs in the electrode, and specifically the electrode active material which is the essential element of the electrode is mixed with additives such as a conductive material, fillers, a binder for powder binding and adhesion to a current collector and a solvent for providing viscosity and powder dispersion to prepare a slurry having flowability.

As described above, the composition mixed to form the electrode active layer is referred to as an electrode mixture in a broad sense. Subsequently, an electrode coating process of coating the electrode mixture on the current collector having electrical conductivity and a drying process for removing the solvent contained in the electrode mixture are performed, and additionally the electrode is rolled to a predetermined thickness.

Meanwhile, defects such as pinholes or cracks may occur in the electrode active layer by the evaporation of the solvent contained in the electrode mixture in the drying process. Additionally, in case of nonuniform drying of the inside and outside of the active layer, due to the difference in solvent evaporation rate, powder floating occurs, i.e., powder of the earlier dried region floats, forming a gap between itself and the later dried region, resulting in low electrode quality.

Additionally, in the manufacture of the electrode by the slurry coating process, in case that the slurry flows down before the slurry is completely dried, the shape of the electrode may not perfectly match the originally designed shape. In particular, this phenomenon occurs more at the corner of the end of the electrode. That is, in case that the slurry flows down, the corner of the end of the electrode may be inclined, not formed at a right angle, and the slurry may go over the originally designed coating region boundary line to form a coating surface at a region that should be maintained as a noncoating region. Meanwhile, to improve the insulating property of the electrode, an insulation region may be disposed, but in the electrode manufacturing method by the slurry coating process, when a process of coating the insulation region on the uncoated region is performed after forming the electrode active material layer, insulation region coating and the inclined surface of the electrode active material layer may overlap. When the electrode is manufactured by electrode slurry coating, the inclined surface is formed at the end of the electrode active material layer, and when an insulation layer is coated on the electrode including the electrode active material layer having the inclined surface, the inclined surface of the electrode active material layer and the insulation layer overlap. To minimize the overlap width, additional process management is required.

To solve the above-described problem, drying devices for uniformly drying the inside and outside of the active layer and adjusting the solvent evaporation rate are contemplated, but the drying devices are very expensive, require considerable amounts of costs and times to operate, and are disadvantageous in terms of manufacturing feasibility. Accordingly, recently, many studies are being made to manufacture dry electrodes that do not need to use solvents.

### DISCLOSURE

### Technical Problem

The present disclosure is directed to providing an electrode, in particular, a dry electrode with improved quality such as life characteristics and adhesion strength and an electrochemical device comprising the same.

### Technical Solution

To solve the above-described problem, according to an aspect of the present disclosure, there is provided an electrode according to the following embodiments.

According to a first embodiment, there is provided an electrode comprising a current collector; a primer layer on all or some of at least one surface of the current collector; and an electrode active material layer on the current collector comprising the primer layer, wherein the electrode active material layer comprises an electrode active material and an electrode binder, and comprises a plurality of granules in which the electrode active material is bonded by the electrode binder, the primer layer comprises a binder and a conductive material, and a sum of amounts of the binder and the conductive material is 90 weight% or more based on a total weight of the primer layer.

According to a second embodiment, in the first embodiment, the sum of amounts of the binder and the conductive material may be 94 weight% or more based on the total weight of the primer layer.

According to a third embodiment, in the first or second embodiment, the primer layer may not substantially comprise a dispersant.

According to a fourth embodiment, in any one of the first to third embodiments, when the primer layer further comprises a dispersant, an amount of the dispersant may be 6 weight% or less based on the total weight of the primer layer.

According to a fifth embodiment, in the third or fourth embodiment, the dispersant may include a cellulose-based polymer, an emulsion-type surfactant or two or more of them.

According to a sixth embodiment, in any one of the first to fifth embodiments, the binder may have a glass transition temperature (Tg) of -40°C to 45°C.

According to a seventh embodiment, in any one of the first to sixth embodiments, the binder may comprise styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them.

According to an eighth embodiment, in any one of the first to seventh embodiments, the electrode active material layer may comprise the electrode active material, an electrode conductive material and the electrode binder, and may comprise the plurality of granules in which the electrode active material and the electrode conductive material are bonded by the electrode binder.

According to a ninth embodiment, in any one of the first to eighth embodiments, the electrode conductive material may have a specific surface area of 10 m²/g to 1,400 m²/g.

According to a tenth embodiment, in any one of the first to ninth embodiments, a thickness of the primer layer may be 300 nm to 1.5 *µ*m.

According to an eleventh embodiment, in any one of the first to tenth embodiments, the granules included in the electrode active material layer may be made by a method including the steps of mixing the electrode active material and the electrode binder with the dispersant to prepare a slurry; and spray drying the slurry.

According to a twelfth embodiment, in the eleventh embodiment, the slurry may further comprise an electrode conductive material.

According to a thirteenth embodiment, in any one of the first to twelfth embodiments, the electrode may be a dry electrode manufactured by a method including the steps of distributing the plurality of granules on the current collector; and rolling the plurality of distributed granules to form the electrode active material layer.

According to another aspect of the present disclosure, there is provided an electrochemical device of the following embodiment.

According to a fourteenth embodiment, there is provided an electrochemical device comprising an electrode assembly comprising a positive electrode, a negative electrode and a separator interposed between the positive electrode and the negative electrode and a battery case accommodating the electrode assembly together with a lithium containing nonaqueous electrolyte, wherein at least one of the positive electrode and the negative electrode is the electrode according to any one of the first to thirteenth embodiments.

### Advantageous Effects

According to an embodiment of the present disclosure, there is provided the electrode, in particular, the dry electrode with good quality such as life characteristics, adhesion strength.

Additionally, according to an embodiment of the present disclosure, there is provided the electrochemical device for fast charging with low resistance characteristics and improved life characteristics.

### DESCRIPTION OF DRAWINGS

The accompanying drawings illustrate a preferred embodiment of the present disclosure and together with the foregoing disclosure, serve to provide further understanding of the technical aspect of the present disclosure, and thus, the present disclosure is not construed as being limited to the drawings.
FIG. 1 is a schematic diagram showing a shell and a core of a granule according to an embodiment of the present disclosure.
FIG. 2a is a cross-sectional scanning electron microscopy (SEM) image of an electrode of example 1 before rolling according to an embodiment of the present disclosure.
FIG. 2b is a cross-sectional SEM image of an electrode of example 2 before rolling according to an embodiment of the present disclosure.
FIG. 3 is a cross-sectional image of a granule prepared in example 1.

### BEST MODE

Hereinafter, the present disclosure is described in detail. However, the present disclosure is not limited by the following description, and if necessary, each element may be changed variously or combined selectively. Accordingly, it should be understood that the present disclosure covers all modifications, equivalents or substitutes included in the spirit and technical scope of the present disclosure.

It should be understood that 'comprising' when used in this specification, specifies the presence of stated elements, but does not preclude the presence or addition of one or more other elements unless expressly stated otherwise.

Additionally, the terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

'A and/or B' as used herein refers to either A or B or both.

The terminology used herein is for the purpose of convenience, but not intended to limiting. For example, the terms 'upper', 'lower', 'left', 'right', 'front', 'rear', 'inner' and 'outer' may be used to describe relative locations or directions between elements rather than absolute positions or to indicate locations or directions in the drawings to which reference is made. These terms include words including them and derivatives and synonyms thereof as well.

The "glass transition temperature (Tg)" used herein is measured by the method commonly used in the corresponding field, and for example, may be measured by differential scanning calorimetry (DSC). For example, the measurement of the glass transition temperature by the differential scanning calorimetry may be performed by a method of measuring the amount of heat at varying temperatures in the range of -80°C to 300°C using TA Instruments Discovery DSC 250. Specifically, the measurement may be performed on a target sample while changing the temperature to 25°C (start)-> 250°C (primary temperature increase)-> -80°C (primary cooling)-> 300°C at a rate of 10°C/min in an order of primary temperature increase->primary cooling->secondary temperature increase. In this instance, the sample during the primary temperature increase process is performed to evaporate the remaining moisture, and the primary cooling and secondary temperature increase process is performed to analyze thermal behavior from a heat thermogram.

The "porosity" as used herein refers to a fraction of voids in a structure over the total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by a Brunauer-Emmett-Teller (BET) measurement method using nitrogen gas, Hg porosimeter and ASTM D-2873. Alternatively, the net density of the separator may be calculated from the density (apparent density) of the separator, the composition ratio of the materials included in the separator and the density of each component, and the porosity of the separator may be calculated from a difference of apparent density and net density.

The "average particle size (D₅₀)" as used herein refers to a particle size at 50% of cumulative particle size distribution of particles, and the particle size may be measured using a laser diffraction method. Specifically, the particle size distribution is calculated by dispersing target powder in a dispersant, introducing it into a commercially available laser diffraction particle size measurement device (for example, Microtrac S3500) and measuring a diffraction pattern difference according to the particle size when particles pass through a laser beam. In the measurement device, the particle size D₅₀ may be measured by calculating the particle diameter at 50% of the cumulative particle size distribution of particles.

The "thickness" of each layer included in the electrode as used herein may indicate a value measured by the commonly used thickness measurement method. The thickness measurement method is not limited thereto, but the thickness may be, for example, a value measured using a thickness measurement device (Mitutoyo, VL-50S-B).

The "specific surface area" as used herein may refer to a value measured by the known method for measuring the specific surface area. The method for measuring the specific surface area is not limited thereto, but the specific surface area may be, for example, a value measured by a flowable or fixed method.

The present disclosure relates to an electrode and an electrochemical device comprising the electrode. The electrochemical device of the present disclosure comprises any device capable of facilitating electrochemical reaction, and in a specific example, may comprise any type of primary battery, secondary battery, fuel battery, solar battery or capacitor such as super capacitor. In the present disclosure, the electrochemical device may be preferably a secondary battery, and more preferably a lithium ion secondary battery.

The electrode according to an aspect of the present disclosure comprises a current collector, a primer layer formed on all or some of at least one surface of the current collector and an electrode active material layer formed on the current collector having the primer layer, wherein the electrode active material layer comprises an electrode active material and an electrode binder, and comprises a plurality of granules in which the electrode active material is bonded by the electrode binder, and the primer layer comprises a binder and a conductive material, and the sum of amounts of the binder and the conductive material is 90 weight% or more based on a total weight of the primer layer.

The electrode according to an aspect of the present disclosure comprises the electrode active material layer comprising the granules, and in this instance, when the sum of amounts of the binder and the conductive material is 90 weight% or more based on the total weight of the primer layer comprising the binder and the conductive material, it is possible to ensure time-dependent stability of the primer layer, and accordingly exhibit good properties such as adhesion strength and life characteristics, but the present disclosure is not limited thereto.

First, the primer layer will be described in detail.

According to an embodiment of the present disclosure, the sum of amounts of the binder and the conductive material may be, specifically, 91 weight% or more, 92 weight% or more, 93 weight% or more, 94 weight% or more, 95 weight% or more, 96 weight% or more, 97 weight% or more, 98 weight% or more, 99 weight% or more, 100 weight% or less, 99 weight% or less, 98 weight% or less, 95 weight% or less, 93 weight% or less, based on the total weight of the primer layer.

According to an embodiment of the present disclosure, the primer layer comprises the binder and the conductive material, and may further comprise a dispersant.

According to another embodiment of the present disclosure, the primer layer comprises the binder and the conductive material, but may not substantially comprise the dispersant.

In the present disclosure, 'do not substantially comprise' represents not comprising the corresponding constituent component, and comprising in a too small amount to perform the function of the corresponding constituent component. For example, the amount of the constituent component that is not substantially included may be 6 weight% or less, 5 weight% or less, 4 weight% or less, 3 weight% or less, 2 weight% or less, 1 weight% or less, 0.5 weight% or less or 0 weight% (i.e., not included).

Accordingly, the primer layer 'does not substantially comprise the dispersant' represents that the primer layer does not comprise the dispersant, and even though the primer layer comprises the dispersant, the dispersant is present in a too small amount to perform the function of the dispersant, i.e., the function of dispersing the binder and the conductive material. For example, when the primer layer comprises the dispersant, the amount of the dispersant may be 6 weight% or less, 5 weight% or less, 4 weight% or less, 3 weight% or less, 2 weight% or less, 1 weight% or less, 0.5 weight% or less or 0 weight% (i.e., no dispersant) based on the total weight of the primer layer.

According to an embodiment of the present disclosure, the dispersant that is not substantially included may decompose when exposed to air, to cause a time-dependent change of the primer layer.

The dispersant is not limited thereto, but may comprise, for example, a cellulose-based polymer, an emulsion-type surfactant or two or more of them.

The cellulose-based polymer may include, for example, carboxymethylcellulose (CMC), an alkali metal salt of carboxymethylcellulose, hydroxymethylcellulose (HMC), an alkali metal salt of hydroxymethylcellulose, hydroxyethylcellulose (HEC), an alkali metal salt of hydroxyethylcellulose, hydroxypropylcellulose (HPC), an alkali metal salt of hydroxypropylcellulose, ethylhydroxyethylcellulose (EHEC), methylhydroxymethylcellulose (MHMC), methylhydroxyethylcellulose (MHEC), ethylhydroxymethylcellulose (EHMC), methylcellulose (MC), ethylcellulose (EC), hydroxypropylmethylcellulose (HPMC), hydroxyethylmethylcellulose (HEMC) or a mixture thereof, but is not limited thereto.

The emulsion-type surfactant may include, for example, a nonionic surfactant, an anionic surfactant, an amphoteric surfactant or a mixture thereof, but is not limited thereto. The nonionic surfactant may include, for example, ethoxylates, amide ethoxylates, amine oxides, alkyl glucosides or a mixture thereof, but is not limited thereto. The anionic surfactant may include, for example, phosphate esters, isothionates, sulfates, sulfonates, taurates or a mixture thereof, but is not limited thereto. The amphoteric surfactant may include betaines, glycinates, alkylamido alkylamines or a mixture thereof, but is not limited thereto.

According to another embodiment of the present disclosure, the primer layer may not substantially comprise the cellulose-based polymer as the dispersant.

According to another embodiment of the present disclosure, the primer layer may not substantially comprise carboxymethylcellulose, hydroxypropylmethylcellulose or a mixture thereof as the dispersant.

According to another embodiment of the present disclosure, the primer layer may not substantially comprise the emulsion-type surfactant.

According to an embodiment of the present disclosure, the binder may include, without limitation, any type of binder commonly used in the primer layer.

According to another embodiment of the present disclosure, the binder may preferably include any binder that ensures the time-dependent stability of the primer layer. Specifically, the binder may have the glass transition temperature Tg of 45°C or less. More specifically, the glass transition temperature of the binder may be -40°C to 45°C. The glass transition temperature of the binder may be, for example, -35°C to 45°C, -30°C to 40°C, - 25°C to 35°C, -20°C to 30°C or -15°C to 25°C.

According to another embodiment of the present disclosure, the binder may comprise, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or a mixture thereof. Specifically, the binder may comprise styrene butadiene rubber (SBR), nitrile butadiene rubber (NBR), polymethylmethacrylate, polyethylhexylacrylate, polybutylacrylate or a mixture thereof.

According to another embodiment of the present disclosure, the binder may be one selected from the above-described types having the above-described glass transition temperature value, or a mixture thereof.

According to another embodiment of the present disclosure, the binder may be styrene butadiene rubber (SBR) having the glass transition temperature Tg of -40°C to 45°C, nitrile butadiene rubber (NBR) having the glass transition temperature Tg of -40°C to 45°C or a mixture thereof.

According to an embodiment of the present disclosure, the conductive material may have the specific surface area of 10 m²/g to 1,400 m²/g. For example, the conductive material may have the specific surface area of 10 m²/g to 400 m²/g or 30 m²/g to 1,400 m²/g.

According to another embodiment of the present disclosure, the conductive material may have the specific surface area of 30 m²/g to 1,400 m²/g, and a spherical shape. In this instance, the primary particle size of the conductive material having the spherical shape may be, for example, 10 nm to 100 nm, specifically 15 nm to 70 nm, but is not limited thereto.

According to another embodiment of the present disclosure, the conductive material may have a tubular (tube type) shape having the specific surface area of 10 m²/g to 400 m²/g. In this instance, in the conductive material having the tubular shape, the diameter of a cross section in a direction perpendicular to the lengthwise direction may be 0.1 to 3 nm, and specifically 0.3 to 1.5 nm, but is not limited thereto.

The conductive material is not limited to a particular type and may include any conductive material that has conductivity while not causing any chemical change to the corresponding battery, and for example, may include graphite such as natural graphite or artificial graphite; a carbon black-based carbon compound such as carbon black, acetylene black, ketjen black, channel black, furnace black, lamp black, thermal black; a conductive fiber such as a carbon fiber or a metal fiber; metal powder such as fluorocarbon, aluminum, nickel powder; conductive whiskers such as zinc oxide, potassium titanate; conductive metal oxide such as titanium oxide; a conductive material such as polyphenylene derivatives, but specifically, to uniformly mix the conductive material and improve conductivity, the conductive material may comprise activated carbon, graphite, carbon black, carbon nanotubes or a mixture thereof, and more specifically, activated carbon.

According to an embodiment of the present disclosure, the primer layer may comprise the above-described composition and have the thickness of 300 nm to 1.5 *µ*m, specifically 700 nm to 1.3 *µ*m, but is not limited thereto.

Subsequently, the current collector included in the electrode, and the electrode active material layer comprising the granules will be described in a sequential order.

According to an embodiment of the present disclosure, the current collector is not limited to a particular type and may include any material that has high conductivity to while not causing any chemical change to the corresponding battery. The current collector may include, for example, stainless steel, aluminum, nickel, titanium, sintered carbon, copper or aluminum or stainless steel surface-treated with carbon, nickel, titanium or silver. Additionally, the current collector may have microtexture on the surface to increase the adhesion strength of the active material, and may come in various type, for example, a film, a sheet, a foil, a net, a porous body, a foam, a nonwoven fabric or the like. Meanwhile, in an embodiment of the present disclosure, the current collector may be 10*µ*m to 25*µ*m in thickness, but is not limited thereto. The current collector may be, for example, 10*µ*m to 20*µ*m in thickness.

The granule included in the electrode active material layer comprises the active material and the binder. The granule may be a composite particle comprising the active material and the binder.

According to an embodiment of the present disclosure, the granule may have a form of the composite particle comprising the active material, the binder and the arbitrary additive if necessary. In an embodiment of the present disclosure, the granule may be a secondary particle formed by at least two active material particles bonded by the binder.

In the present disclosure, to distinguish the constituent component included in the electrode active material layer from the constituent component included in the primer layer, an 'electrode active material', an 'electrode conductive material' and an 'electrode binder' are used herein.

The electrode active material may be a collection of particles, and here, the diameter of each particle of the electrode active material may be, for example 0.05 *µ*m to 2 *µ*m. In an embodiment of the present disclosure, based on the total weight of the granules, the amount of the electrode active material may be, for example, 80 wt% or more or 90 wt% or more, and the amount of the electrode binder may be, for example, 20 wt% or less or 10 wt% or less. In an embodiment of the present disclosure, the granule may further comprise the electrode conductive material, if necessary. When the electrode conductive material is included, the amount of the electrode conductive material may be included in the range of 0.1 wt to 20 wt%, preferably 0.1 wt% to 10 wt%, and more preferably 0.1 wt% to 5 wt% based on the total weight of the granules.

According to an embodiment of the present disclosure, the amount of the electrode active material may be 85 wt% to 98 wt% based on the total weight of the granules. Within the above-described range, the amount of the electrode binder may be 0.5 to 10 wt%, and the amount of the electrode conductive material may be 0.5 wt% to 5 wt%. According to another embodiment, the amount of the electrode active material may be 90 wt% to 98 wt%, the amount of the electrode binder may be 0.5 wt% to 5 wt%, and the amount of the electrode conductive material may be 0.5 wt% to 5 wt%.

In the present disclosure, the amount of the electrode binder included in a shell 102 of the granule is larger than the amount of the electrode binder included in a core 101 of the granule. The amount of the electrode binder may be weight or volume.

Together with this or independently of this, the amount (wt%)(Bs/Gt) of the electrode binder included in the shell 102 of the granule is higher than the amount (wt%)(Bc/Gt) of the electrode binder included in the core 101 of the granule based on the total weight 100wt% of the granules. Here, the Bc denotes the weight of the electrode binder included in the core, the Bs denotes the weight of the electrode binder included in the shell, and the Gt denotes the total weight of the granules.

Together with this or independently of this, the amount (vol%)(Bs/Gt) of the electrode binder included in the shell 102 of the granule is higher than the amount (vol%)(Bc/Gt) of the electrode binder included in the core 101 of the granule based on the total volume 100 vol% of the granules. Here, the Bc denotes the volume of the electrode binder included in the core, the Bs denotes the volume of the electrode binder included in the shell, and the Gt denotes the total volume of the granules.

Here, the shell refers to an area near the granule surface to a predetermined depth in a direction from the granule surface toward the granule center, and the core refers to an area other than the shell. In an embodiment of the present disclosure, the shell may refer to an area from the center of the granule to the granule surface of 70% or more of the radius in the outward direction of the granule. In an embodiment of the present disclosure, the shell may refer to, for example, an area up to the granule surface of 80% or more, 85% or more, 90% or more or 95% or more of the radius.

In an embodiment of the present disclosure, the center of the granule may refer to a point corresponding to 1/2 of the longest diameter of the granule.

In an embodiment of the present disclosure, in the area from the granule center to the granule surface of 90% or more of the radius, the amount of the electrode binder may be 50 wt% or more, 60 wt% or more, 70 wt% or more, 80 wt% or more, or 90 wt% or more based on the total weight of the granules in the corresponding area.

In another embodiment of the present disclosure, in the area from the granule center to the granule surface of 95% or more of the particle radius, the amount of the electrode binder may be 50 wt% or more, 60 wt% or more, 70 wt% or more, 80 wt% or more or 90 wt% or more based on the total weight of the granules in the corresponding area.

In another embodiment of the present disclosure, in the area from the granule center to the granule surface of 99% or more of the radius, the amount of the electrode binder may be 50 wt% or more, 60 wt% or more, 70 wt% or more, 80 wt% or more, or 90 wt% or more based on the total weight of the granules in the corresponding area.

In an embodiment of the present disclosure, in the area from the granule center to the granule surface of 90% or more of the radius, the amount of the electrode binder may be 50 vol% or more, 60 vol% or more, 70 vol% or more, 80 vol% or more, or 90 vol% or more based on the total volume of the granules in the corresponding area.

In another embodiment of the present disclosure, in the area from the granule center to the granule surface of 95% or more of the particle radius, the amount of the electrode binder may be 50 vol% or more, 60 vol% or more, 70 vol% or more, 80 vol% or more, or 90 vol% or more based on the total volume of the granules in corresponding area.

In another embodiment of the present disclosure, in the area from the granule center to the granule surface of 99% or more of the radius, the amount of the electrode binder may be 50 vol% or more, 60 vol% or more, 70 vol% or more, 80 vol% or more, or 90 vol% or more based on the total volume of the granules in the corresponding area.

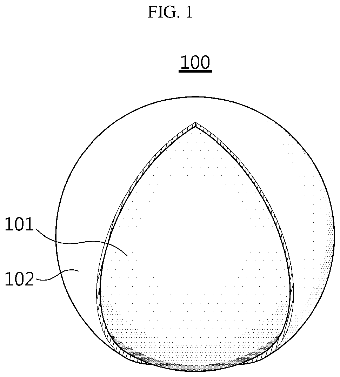

FIG. 1 is a schematic scanning electron microscopy (SEM) image of the granule according to an embodiment of the present disclosure. Referring to FIG. 1, the granule may be divided into the shell area 102 having high electrode binder content to the predetermined depth in the direction from the surface toward the particle center, and the core 101 surrounded by the shell.

Describing the granule in more detail, the granule may comprise the core comprising a plurality of electrode active materials; and the shell disposed over all or some of the outer side of the core and comprising the electrode binder to bind the electrode active materials. That is, in the core of the granule, the plurality of electrode active materials may form an agglomerate by at least one of surface contact, line contact or point contact, and in the shell of the granule, the electrode binder may be disposed over all or some of the outer side of the agglomerate, and the electrode binder included in the shell may immobilize and bind the plurality of electrode active materials of the core of the granule.

According to an embodiment of the present disclosure, the core of the granule may further comprise a small amount of electrode binder to connect and immobilize the plurality of electrode active materials of the core of the granule. However, as described above, the amount of the electrode binder in the shell is preferably higher than the amount of the electrode binder in the core.

Meanwhile, in an embodiment of the present disclosure, the granule may have the aspect ratio of 0.5 to 1.0, and preferably 0.75 to 1.0. The aspect ratio may refer to a ratio of the long axis length to the short axis length of the granule. In another embodiment of the present disclosure, for example, the average aspect ratio of the granules may have a value of 0.5 to 1.0, preferably 0.75 to 1.0, and in this case, the average aspect ratio may refer to a ratio of the average long axis length to the average short axis length of the granules. In this instance, the average short axis length may refer to the average length value in the axial direction having the shortest length of the granule, and the average long axis length may refer to the average length value in the axial direction having the longest length of the granule. When the aspect ratio of the granule satisfies the above-described range, it is advantageous due to having sufficient flowability suitable for the process.

Meanwhile, in an embodiment of the present disclosure, the particle size may range from 0.1 to 1,000*µ*m based on the longest diameter of the granule. In another embodiment of the present disclosure, the average particle size D₅₀ of the granules may range from 0.1 to 1,000*µ*m.

The conductive material (referred to as 'the electrode conductive material') included in the granule is not limited to a particular type and may include any conductive material having conductivity while not causing any chemical change to the corresponding battery. For the electrode conductive material, the conductive material included in the primer layer is used. Meanwhile, in an embodiment of the present disclosure, the granule may comprise a single conductive material alone, or may comprise at least two different conductive materials in one particle. For example, the granule may comprise a mixture of carbon black and carbon nanotubes at a predetermined ratio as the conductive material.

The binder (referred to as 'the electrode binder') included in the granule is not limited to a particular type and may include any binder for uniformly dispersing the powdery active material and the conductive material while not causing any chemical change to the corresponding battery. For the electrode binder, the binder included in the primer layer may be used. Specifically, the electrode binder may be preferably an aqueous binder included in the primer layer.

According to an embodiment of the present disclosure, the electrode binder may comprise, for example, a diene-based polymer, an acrylate-based polymer, a fluorine-based polymer, styrene-based or two or more of them.

Examples of the diene-based polymer may include a polymer comprising a monomer unit derived from conjugated diene such as butadiene, isoprene and a ratio of the monomer unit may be usually 40 wt% or more, preferably 50 wt% or more, and more preferably 60 wt% or more. Specifically, the diene-based polymer may include conjugated diene homopolymer such as polybutadiene or polyisoprene; aromatic vinyl-conjugated diene copolymer such as styrene-butadiene copolymer (SBR) with carboxyl modification; vinyl cyanide-conjugated diene copolymer such as acrylonitrile-butadiene copolymer (NBR); hydrogenated SBR, hydrogenated SNBR.

The acrylate-based polymer may include, for example, a polymer comprising a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific example of the acrylate-based polymer may include a cross-linked acrylate-based polymer such as an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacylate copolymer, an acrylic acid 2-ethylhexyl-styrene-methacrylic acid-ethyleneglycoldimethacylate copolymer, a butyl acrylate-acrylonitrile-diethyleneglycoldimethacylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, the copolymer of ethylene and (meth)acrylic acid such as an ethylene-acrylic acid copolymer, an ethylene-methacrylic acid copolymer may be used as a dispersion binder.

The fluorine-based polymer may comprise polytetrafluoroethylene (PTFE), polyolefin or a mixture thereof, and specifically, polytetrafluoroethylene (PTFE).

Specifically, the polytetrafluoroethylene (PTFE) may be included in an amount of 60 wt% or more based on the total weight of the electrode binder.

Meanwhile, in this instance, the electrode binder may further comprise polyethylene oxide (PEO), polyvinylidene fluoride (PVdF) and polyvinylidene fluoride-co-hexafluoropropylene (PVdF-HFP).

Among them, the diene-based polymer and the cross-linked acrylate-based polymer is preferred, and the cross-linked acrylate-based polymer is especially preferred, since it is possible to obtain the electrode active material layer having good binding to the current collector or good surface flatness and manufacture the electrode for the electrochemical device high capacitance and low internal resistance.

The electrode binder is not limited to a particular shape, but a particulate electrode binder is preferred since the binding performance is good and it is possible to suppress the decline in capacitance of the manufactured electrode or degradation by the repeated charging/discharging. The particulate electrode binder may include, for example, dispersible binder particles dispersed in water like latex, or powder obtained by drying the dispersion. The particulate electrode binder may be preferably included in the negative electrode.

Meanwhile, in an embodiment of the present disclosure, the granule may comprise a single binder material or at least two different binder materials in one particle. For example, the granule may comprise a mixture of styrene-butadiene rubber (SBR) and acrylate-based polymer at a predetermined ratio as the binder material.

The electrode according to the present disclosure may be a positive or negative electrode.

In an embodiment of the present disclosure, when the electrode is a positive electrode, in this instance, the electrode active material may be a positive electrode active material. The positive electrode active material may comprise, for example, lithium transition metal oxide; lithium iron phosphate; lithium nickel-manganese-cobalt oxide; oxide with partial substitution of transition metal for lithium nickel-manganese-cobalt oxide, or two or more of them but is not limited thereto. Specifically, the positive electrode active material may include, for example, layered compounds such as lithium cobalt oxide (LiCoO₂), lithium nickel oxide (LiNiO₂) or compounds with one or more transition metal substitution; lithium manganese oxide of formula Li₁₊ₓMn₂₋ₓO₄ (x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 to 0.3); lithium manganese composite oxide represented by formula LiMn₂₋ₓMₓO₂ (M = Co, Ni, Fe, Cr, Zn or Ta, x = 0.01 ~ 0.1) or Li₂Mn₃MO₈ (M = Fe, Co, Ni, Cu or Zn); Li₁₊ₓ(NiaCobMncAld)₁₋ₓO₂ with partial substitution of aluminum ion for Li in Formula (x = 0 to 0.03, a = 0.3 to 0.95, b = 0.01 to 0.35, c = 0.01 to 0.5, d = 0.001 to 0.03, a+b+c+d=1); lithium metal phosphate LiMPO₄ (M = Fe, CO, Ni, or Mn), disulfide compounds; Fe₂(MoO₄)₃, but is not limited thereto.

In another embodiment of the present disclosure, when the electrode is a negative electrode, in this instance, the electrode active material may be a negative electrode active material. The negative electrode active material may include, for example, carbon including graphite-based carbon such as nongraphitizing carbon, natural graphite or artificial graphite; metal composite oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metal; lithium alloys; silicon-based alloys; tin-based alloys; silicon-based oxide such as SiO, SiO/C, SiO₂; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni-based materials, but is not limited thereto.

According to an embodiment of the present disclosure, the granule may comprise a single electrode active material or at least two different electrode active materials in one particle. The electrode active material may comprise the above-described materials without limitation. For example, the granule may comprise artificial graphite and natural graphite as the electrode active material, and the artificial graphite and the natural graphite may be mixed at a predetermined ratio.

According to an embodiment of the present disclosure, the amount of the electrode active material in the electrode active material layer may be 85 to 98 parts by weight, and the amount of the electrode binder may be 0.5 to 10 parts by weight. The amount of the electrode active material may be 90 to 98 parts by weight, and the amount of the electrode binder may be 0.5 to 5 parts by weight.

According to an embodiment of the present disclosure, with regard to the mix ratio of the electrode active material, the electrode conductive material and the electrode binder in the electrode active material layer, the weight ratio of the electrode active material: the electrode conductive material: the electrode binder may be 80 to 99 parts by weight : 0.5 to 10 parts by weight : 0.5 to 10 parts by weight. Additionally, the weight ratio of the electrode active material: the electrode conductive material: the electrode binder may be 90 to 99 parts by weight: 0.5 to 5 parts by weight: 0.5 to 10 parts by weight.

In an embodiment of the present disclosure, the electrode active material layer has a uniform electrode binder distribution on the basis of the thicknesswise direction. In a specific embodiment, in the top and bottom on the basis of a point corresponding to 50% from the current collector in the thickness of the electrode active material layer, a difference between the electrode binder content (wt%) in the top 100 wt% and the electrode binder content (wt%) in the bottom 100 wt% may exhibit a value of 10 wt% or less. Additionally, a difference of the electrode binder content in an area up to 15% of the thickness in a direction from the current collector toward the electrode surface on the basis of the thickness of the electrode active material layer and an area up to 15% in a direction from the surface of the electrode active material layer toward the current collector may exhibit a value of 10 wt% or less.

This electrode binder distribution may result from the granules closely packed in the electrode active material layer according to the present disclosure. The electrode manufacturing method of the present disclosure as described below is characterized by making granules comprising the electrode material, distributing the granules over the current collector and densely packing the granules into a layered structure. In the case of the electrode manufacturing method including preparing the slurry, migration of the electrode binder is induced by the evaporation of the solvent during the drying of the slurry, and the electrode binder is intensively distributed in the shell of the electrode. However, since the present disclosure uses the method of densely packing the granules in dry state without using the solvent, the migration of the electrode binder does not occur. Accordingly, it results in a uniform electrode binder distribution in the thicknesswise direction in each unit layer.

The electrode active material layer comprises the electrode active material and the electrode binder. In the present disclosure, the electrode active material layer may have the layered structure of the closely packed granules. When the granules are introduced into the electrode, the aspect ratio or particle size range may not be maintained at the initial condition by a calendaring process as described below. The electrode active material layer may comprise the granules in an amount of 80 wt% or more, 90 wt% or more, 95 wt% or more or 99 wt% or more based on 100 wt% of the electrode active material layer.

In an embodiment of the present disclosure, the electrode active material layer may further comprise the electrode active material, the electrode binder, the electrode conductive material etc that are not granulated into the granule and free from the granule. Alternatively, the electrode active material layer may further comprise granules having the aspect ratio and/or particle size range outside of the above-described range.

Meanwhile, in some cases, the electrode active material layer may further comprise fillers to suppress the expansion of the electrode active material layer, and the fillers are not limited to a particular type and may include any fibrous material that does not cause any chemical change to the corresponding battery, and for example, may include olefin-based polymer such as polyethylene, polypropylene; and fibrous materials such as glass fibers, carbon fibers.

The electrode active material layer comprises the granules packed in a layered structure, and has pores provided by interstitial volume or space between the granules, and has a porous property derived from this structure. In an embodiment of the present disclosure, the electrode active material layer preferably has the porosity of 20 vol% to 40 vol% in terms of electrolyte solution wettability, shape stability and ionic conductivity.

According to an embodiment of the present disclosure, the thickness of the electrode active material layer may be, for example, 30 *µ*m to 300 *µ*m, but is not limited thereto.

According to an embodiment of the present disclosure, the electrode active material layer may be a single layer comprising one unit active material layer.

According to another embodiment of the present disclosure, the electrode active material layer may comprise a stack of at least two unit active material layers. In this instance, the electrode active material, the electrode conductive material and the electrode binder included in each unit active material layer may be identical or different for each layer, and is not limited thereto.

According to an embodiment of the present disclosure, the granule included in the electrode active material layer may be made by a method including the steps of mixing the electrode active material and the electrode binder with the dispersant to prepare a slurry and spray drying the slurry.

According to an embodiment of the present disclosure, the granule included in the electrode active material layer may be made by a method including the steps of mixing the electrode active material, the electrode conductive material and the electrode binder with the dispersant to prepare a slurry and spray drying the slurry.

First, the electrode active material and the electrode binder and optionally the electrode conductive material, and/or the additive are dispersed or dissolved in the dispersant (the solvent for the electrode binder) to obtain the slurry in which the electrode active material and the electrode binder, and optionally the electrode conductive material and/or the additive are dispersed or dissolved.

The dispersant used to obtain the slurry is, the most suitably, water, but an organic solvent may be used. The organic solvent may include, for example, alkylalcohols such as methylalcohol, ethylalcohol, propylalcohol; alkylketones such as acetone, methylethylketone; ethers such as tetrahydrofuran, dioxane, diglyme; amides such as diethylformamide, dimethylacetoamide, N-methyl-2-pyrrolidone (hereinafter referred to as NMP), dimethylimidazolidinone; sulfur-based solvents such as dimethylsulfoxide, sulfolane, but alcohols are preferred. When the organic solvent having lower boiling point than water is used, the drying rate may increase during the flowable assembly. Additionally, since the dispersion or dissolution of the electrode binder may change, the viscosity or flowability of the slurry may be adjusted according to the amount or type of the dispersant, thereby improving the production efficiency.

The dispersant used to prepare the slurry may be included in such an amount that the solids concentration of the slurry usually ranges 1 to 50 wt%, or 5 to 50 wt%, or 10 to 30 wt%.

The method or order of dispersing or dissolving the electrode active material and the electrode binder in the dispersant is not limited to a particular method or order, and for example, a method which adds the electrode active material and the electrode binder to the dispersant and mixes them, and a method which dissolves or disperses the electrode binder in the dispersant, and finally, adds the electrode active material and mixes them. Additionally, in this instance, as described above, the electrode conductive material and additive may be optionally added to the dispersant. Accordingly, the electrode active material, the electrode conductive material and the electrode binder may be added to the dispersant and mixed together, and after the electrode binder is dissolved or dispersed in the dispersant, finally, the electrode active material and the electrode conductive material may be added and mixed together.

The mixing means may include, for example, a ball mill, a sand mill, a bead mill, a pigment dispersion machine, a stone mill, an ultrasonic dispersion machine, a homogenizer and a planetary mixer. The mixing may be performed, for example, in the range of room temperature to 80°C for 10 minutes to a few hours.

Subsequently, the slurry is spray dried. The spray drying method dries the slurry while spraying the slurry in hot air. The spray method of equipment using the spray drying method includes a rotary disc method and a pressure nozzle method. The rotary disc method is a method which feeds the slurry into almost the center of the disc that rotates at high speed, urges the slurry to the periphery of the disc by the centrifugal force of the disc, to create mist and dries it. The rotation rate of the disc relies on the size of the disc, but is usually 5,000 rpm to 35,000 rpm, and preferably 15,000 rpm to 30,000 rpm. Meanwhile, the pressure nozzle method is a method which sprays the slurry together with air or a high pressure fluid such as a liquid through the thin nozzle to convert into mist and dries it.

In an embodiment of the present disclosure, the temperature of the hot air may be controlled to 80°C to 250°C on the basis of the reactor inlet temperature (input) to form the granule structure having high electrode binder content in the shell. According to an embodiment of the present disclosure, the temperature may be preferably controlled to 175°C to 220°C, and more preferably 180°C to 220°C, taking into account the gradient of the electrode binder content and the aspect ratio of the granule. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, the outlet temperature (the temperature of hot air released from the reactor) of the reactor may be controlled to 90°C to 130°C during the spray drying.

When the outlet temperature and/or a difference △T between inlet temperature and outlet temperature is low, drying is not properly performed, so particles containing a large amount of remaining solvent may be formed, thereby failing to form spherical particles of uniform shape, and granules may agglomerate or amorphous granules may be made. Meanwhile, when the inlet temperature is too high and △T is large, the granule is not formed due to overdrying and particles having very small particle size D₅₀ and low aspect ratio may be produced. Accordingly, to control the particle size to a proper level for high sphericity and less electrode binder agglomeration, it is necessary to control the inlet temperature and outlet temperature within the proper range.

Additionally, heating may be optionally performed to cure the surface of the result obtained by the spray drying, i.e., the granule, and in this instance, the thermal treatment temperature may be usually 80°C to 300°C.

According to an embodiment of the present disclosure, the electrode may be manufactured by a method including the steps of distributing the plurality of granules on the current collector and pressing the distributed granules to form the electrode active material layer.

The formation of the electrode active material layer may be performed by the following method.

The primer layer comprising the binder and the conductive material is disposed over all or some of at least one surface of the current collector. Subsequently, the granules made by the above-described method are distributed on the current collector having the primer layer.

According to an embodiment of the present disclosure, the electrode active material layer may be formed by feeding the prepared granules into a roll type press forming machine using a screw feeder. When forming the electrode active material layer, the current collector having the primer layer on all or some of at least one surface may be transferred to the roll of the press forming machine at the same time of feeding the granules, to directly stack the electrode active material layer on the current collector. Alternatively, the granules may be distributed on the current collector and undergone uniform thickness adjustment using a blade, and the electrode active material layer may be formed using a press machine.

In the method, the temperature of the roll press forming may be usually 0 to 200°C, and preferably may be higher than the melting point or the glass transition temperature of the electrode binder, and more preferably, higher by at least 20°C than the melting point or the glass transition temperature. The molding rate of the roll press forming may be, for example, 0.1 to 20 m/min, or 1 to 10 m/min. Additionally, the press line pressure between rolls may be, for example, 0.2 to 30 kN/cm, or 0.5 to 10 kN/cm.

To reduce the thickness difference of the formed electrode and increase the density of the electrode active material layer, thereby contributing to high capacity, pressing may be additionally performed if necessary. In general, the post-pressing method uses a press process by rolls. In the roll press process, two cylindrical rolls are vertically arranged in parallel at a small interval, and the electrode is placed between the rolls and pressed by rotating the rolls in the opposite directions. The rolls may undergo temperature adjustment by heating or cooling.

According to an embodiment of the present disclosure, the electrode active material layer may be a single layer formed by the above-described method.

According to another embodiment of the present disclosure, the electrode active material layer may be a stack of at least two unit active material layers formed by repeating the above-described method at least twice using the electrode layer formed by the above-described method as a unit active material layer. When the electrode active material layer comprises at least two unit active material layers, one unit active material layer may be formed on the current collector by the above-described method, and in the subsequent process, the granules may be distributed over the underlying unit active material layer surface instead of the current collector to form a multilayer structure.

According to another aspect of the present disclosure, there is provided an electrochemical device comprising an electrode assembly comprising a positive electrode, a negative electrode and a separator interposed between the positive electrode and the negative electrode and a battery case accommodating the electrode assembly together with a lithium containing nonaqueous electrolyte, wherein at least one of the positive electrode and the negative electrode is the above-described electrode.

According to still another aspect of the present disclosure, there may be provided an energy storage system comprising the electrochemical device as a unit battery.

The separator may include a porous polymer film commonly used as the separator, for example, a porous polymer film of polyolefin-based polymer such as ethylene homopolymer, propylene homopolymer, ethylene/butene copolymer, ethylene/hexene copolymer and ethylene/methacrylate copolymer as used singly or in stack. Additionally, an insulation thin film having high ion permeability and mechanical strength may be used. The separator may comprise a safety reinforced separator (SRS) in which a ceramic material is coated on the separator surface at a small thickness. Besides, the separator may comprise commonly used porous nonwoven fabrics, for example, nonwoven fabrics of high melting point glass fibers, polyethyleneterephthalate fibers, but is not limited thereto.

The electrolyte solution comprises a lithium salt as an electrolyte and an organic solvent for dissolving it.

The lithium salt may include, without limitation, any lithium salt commonly used in the electrolyte solution for the electrochemical device, and for example, an anion of the lithium salt may include F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ or (CF₃CF₂SO₂)₂N⁻, or two or more of them.

The organic solvent included in the electrolyte solution may include, without limitation, any organic solvent commonly used in the corresponding field, and may typically include at least one of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylenecarbonate, sulfolane, gamma-butyrolactone, propylenesulfite, tetrahydrofuran or two or more of them.

In particular, among the carbonate-based organic solvents, cyclic carbonate such as ethylenecarbonate and propylenecarbonate is a high viscosity organic solvent and has a high dielectric constant, so it dissolves the lithium salt in the electrolyte well, and more preferably, when the cyclic carbonate is mixed with high viscosity and low dielectric constant linear carbonate such as dimethylcarbonate and diethylcarbonate at an optimal ratio, the electrolyte solution having high electrical conductivity may be prepared.

Optionally, the electrolyte solution stored according to the present disclosure may further comprise an additive such as an overcharge prevention agent commonly included in the electrolyte solution.

The electrochemical device according to an embodiment of the present disclosure may be completed by placing the positive electrode and the negative electrode with the separator interposed between to form the electrode assembly, putting the electrode assembly in, for example, a pouch, a cylindrical battery case or a prismatic battery case, and injecting the electrolyte. Alternatively, the electrochemical device may be completed by stacking the electrode assembly and immersing it in the electrolyte solution, placing the obtained result in the battery case, and sealing the battery case.

In this instance, the detailed structure of the electrochemical device and the energy storage system is known, and its description is omitted.

Hereinafter, the present disclosure will be described in detail by describing examples in detail. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

### [Manufacture of electrode]

### Example 1

### Primer layer on current collector

Carbon black (the specific surface area 58 m²/g, primary particle size 37 nm) as a conductive material, styrene-butadiene rubber (SBR) as a binder and carboxymethylcellulose (CMC daice12200 1.5% aqueous solution) as a dispersant were mixed in water as a dispersant to prepare a slurry for a primer layer. In this instance, a ratio of amounts of the conductive material, the binder and the dispersant in the slurry was equal to a ratio of amounts of the conductive material, the binder and the dispersant in the primer layer that will be formed, and the ratio of amounts is shown in the following Table 1. The solids ratio of the slurry for the primer layer was 7 wt%.

The prepared slurry for the primer layer was coated on one surface of a copper current collector (thickness 10 *µ*m), and dried in 130°C condition to form the primer layer over the entire copper current collector.

The thickness of the primer layer and the type and glass transition temperature Tg of the binder are shown in the following table 1.

### Preparation of granule for electrode active material layer

1.91 parts by weight of natural graphite having sphericity of 0.95 and 76.5 parts by weight of artificial graphite having the average sphericity of 0.9 as an electrode active material, carbon black (SuperC65) as an electrode conductive material, carboxymethylcellulose (daice12200, aqueous solution type, solids concentration1.5wt%) as an electrode dispersant, and modified styrene butadiene copolymer (Grade Name: AX-B119) as an electrode binder were mixed with water as a dispersant at a weight ratio of 95.6:1.0:1.1:2.3 through a homogenizer to prepare a slurry having the viscosity of about 1000 cPs level. In this instance, the solids content in the slurry was 30 wt%. In the weight ratio, carboxymethylcellulose was calculated on the basis of solids.

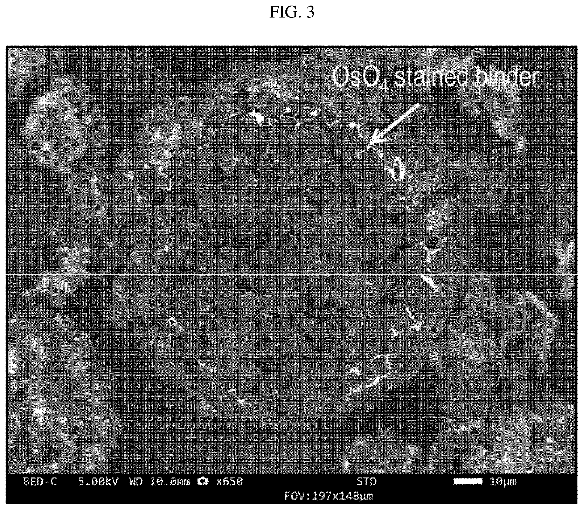

The prepared slurry was fed into a spray dryer together with hot air in the pressure range condition of -40 mmH₂O and dried. In this instance, the condition of the spray dryer was controlled such that the inlet temperature is 180°C, the outlet temperature is 90°C, and the rotation rate is 18,000 rpm. Coarse powder of 150*µ*m or more was removed from the obtained granules using an industrial sieve, and fine powder of less than 40*µ*m was separated again. The separated fine powder was mixed with the granules free of coarse powder to finally prepare granules for electrodes containing a larger amount of fine powder. The granule comprises a core comprising the plurality of electrode active materials and the electrode conductive material and a shell disposed on the outer side of the core and comprising the electrode binder to bind the electrode active materials and the electrode conductive material. The average particle size D₅₀ of the obtained granules was 66.5 *µ*m, and the aspect ratio was 0.96. FIG. 3 shows an SEM image of the prepared granule.

### Manufacture of electrode

The prepared granules were uniformly distributed over one surface of the current collector having the primer layer in an amount of 400 mg per 25cm² of the current collector using a thickness adjustment bar, and pressed using a sheeting machine or a roll-to-roll hot rolling forming machine at the rate of 2m per min in the condition of the pressure of 0.7 ton per cm and 60°C to form an electrode active material layer, to manufacture an electrode.

### Examples 2 to 10

Current collectors having primer layers, and electrodes comprising the same were manufactured by the same method as example 1 except the ratio of amounts of the conductive material, the binder and the dispersant, the type of the binder, and the thickness of the primer layer were changed to the condition shown in the following Table 1.

### [Adhesion strength evaluation]

The electrodes manufactured in examples 1 to 10 were manufactured with the same porosity and tailored into the width 20 mm, length 15 cm and attached to a glass plate using a 3M double-sided tape. In this instance, the double-sided tape used is a commercially available product and the adhesion strength on the two surfaces is 200 to 1000 gf/20mm, and the width is 20 mm or more enough to cover the total width of the electrode.

The electrode was attached to the double-sided tape attached to the glass plate, and the double-sided tape and the electrode were brought into close contact by moving a 2kg roller in reciprocating motion ten times. The adhesion strength of the sample was measured at an angle of 90° in a peel test mode using a tensile strength measurement device, and the measurement results are shown in the following Table 1.

**[Table 1]**

| Classification | Amount of binder (wt%) (based on the total weight of primer layer) | Amount of conductive material (wt%) (based on the total weight of primer layer) | Amount of dispersant (wt%) (based on the total weight of primer layer) | Type of binder / Tg | Thickness of primer layer | Adhesion strength (gf/20 mm) |
|---|---|---|---|---|---|---|
| Example 1 | 68 wt% | 29 wt% | 3 wt% | SBR / -15°C | 1 *µ*m | 17.82 |
| Example 2 | 70 wt% | 30 wt% | ~0 wt% | SBR / -15°C | 1 *µ*m | 33.75 |
| Example 3 | 69 wt% | 29.5 wt% | 1.5 wt% | SBR / -15°C | 1 *µ*m | 24.66 |
| Example 4 | 69 wt% | 28.3 wt% | 5.7 wt% | SBR / -15°C | 1 *µ*m | 11.02 |
| Example 5 | 68 wt% | 29 wt% | 3 wt% | SBR / -15°C | 300 *µ*m | 7.38 |
| Example 6 | 68 wt% | 29 wt% | 3 wt% | SBR / -15°C | 1.5 *µ*m | 19.45 |
| Example 7 | 68 wt% | 29 wt% | 3 wt% | SBR / 0°C | 1 *µ*m | 13.55 |
| Example 8 | 68 wt% | 29 wt% | 3 wt% | SBR / 10°C | 1 *µ*m | 7.68 |
| Example 9 | 70 wt% | 30 wt% | ~0 wt% | NMP-based SBR / 25°C | 1.5 *µ*m | 27.37 |
| Example 10 | 70 wt% | 30 wt% | ~0 wt% | NMP-based SBR / 25°C | 1.0 *µ*m | 28.56 |

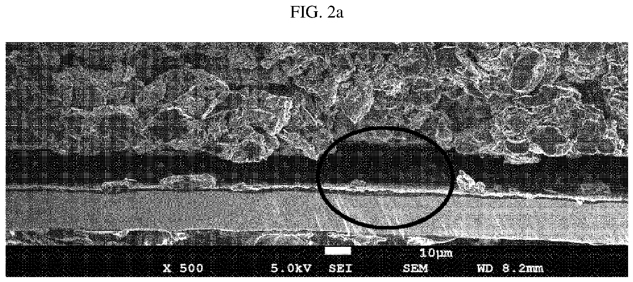

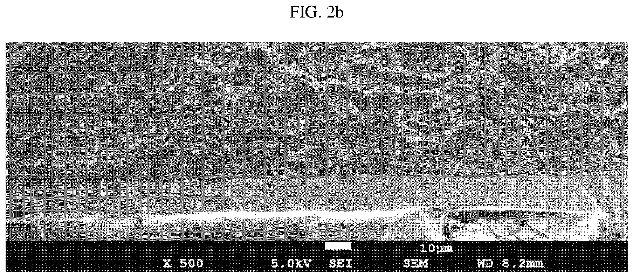

Meanwhile, FIGS. 2a and 2b are cross-sectional SEM images of the electrodes of examples 1 and 2 before rolling, respectively. Seemingly, it appears that there is no difference between examples 1 and 2, but as shown in the results of the above Table 1, there is a difference in adhesion strength. The difference in adhesion strength results from the binding strength between the primer layer and the electrode active material layer, and as can be seen from FIGS. 2a and 2b, seeing the cross-sectional SEM image of the nonrolled electrode, example 1 (FIG. 2a) shows local delamination between the primer layer and the electrode active material layer, while example 2 (FIG. 2b) does not show local delamination. Through this, it was confirmed that example 2 comprising no dispersant shows the better effect in terms of adhesion strength.

### [Time-dependent change evaluation]

A time-dependent change was evaluated after staying the electrodes manufactured in examples 9 and 10 still for four days in room temperature high humidity condition (relative humidity 65% or more) and evaluating a change in adhesion strength. The results are shown in the following Table 2.

**[Table 2]**

| Classification | Adhesion strength immediately after manufacture (gf/20 mm) | Adhesion strength after 4 days (gf/20 mm) |
|---|---|---|
| Example 9 | 27.37 | 21.89 |
| Example 10 | 28.56 | 23.06 |

As can be seen from the results of the above Table 2, after staying still for four days, the electrodes manufactured in examples 9 and 10 do not show any adhesion strength reduction with the significant time-dependent change.

### [Identification of binder distribution in granule]

The electrode binder distribution in the granules prepared in example 1 was identified by radial profile analysis of the cross section of the granules using EPMA (JXA-8350F, -15kV, 20nA stage mapping condition).

First, in the granules obtained in example 1, the electrode binder was stained using OsO4. The staining was performed by placing the granules in a glass funnel using OsO4 aqueous solution and vaporizing a reagent to cause reaction. Subsequently, an epoxy resin was mixed, held in a silicone mold and cured to obtain a granule matrix. Subsequently, the granule matrix was manufactured as a one-sided sample using an ion milling machine (Hitachi IM5000 acceleration voltage: 6kV). The manufactured one-sided sample was fixed to an EPMA such that the granules are disposed at the center of the display, cross section scanning was performed by a stage mapping method, a mass map was prepared using the scan results and an Os map was extracted therefrom.

The electrode binder distribution in the granule of example 1 was identified from the extracted Os map, and specifically it can be seen that in the granule obtained in example 1, the electrode binder content in the shell up to the granule surface 70% or more of the radius, in particular 80% or more is higher than that of the core.

While the present disclosure has been hereinabove described with reference to the embodiments and the accompanying drawings, it is obvious to those skilled in the art that a variety of modifications and changes may be made within the scope of the present disclosure based on the foregoing description.

## Claims

1. An electrode, comprising:
a current collector;
a primer layer on all or some of at least one surface of the current collector; and
an electrode active material layer on the current collector comprising the primer layer,
wherein the electrode active material layer comprises an electrode active material and an electrode binder, and comprises a plurality of granules in which the electrode active material is bonded by the electrode binder,
wherein the primer layer comprises a binder and a conductive material, and
wherein a sum of amounts of the binder and the conductive material is 90 weight% or more based on a total weight of the primer layer.

2. The electrode according to claim 1, wherein the sum of amounts of the binder and the conductive material is 94 weight% or more based on the total weight of the primer layer.

3. The electrode according to claim 1, wherein the primer layer does not substantially comprise a dispersant.

4. The electrode according to claim 1, wherein when the primer layer further comprises a dispersant, an amount of the dispersant is 6 weight% or less based on the total weight of the primer layer.

5. The electrode according to claim 4, wherein the dispersant includes a cellulose-based polymer, an emulsion-type surfactant or two or more of them.

6. The electrode according to claim 1, wherein the binder has a glass transition temperature (Tg) of -40°C to 45°C.

7. The electrode according to claim 1, wherein the binder comprises styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them.

8. The electrode according to claim 1, wherein the electrode active material layer comprises the electrode active material, an electrode conductive material and the electrode binder, and comprises the plurality of granules in which the electrode active material and the electrode conductive material are bonded by the electrode binder.

9. The electrode according to claim 8, wherein the electrode conductive material has a specific surface area of 10 m²/g to 1,400 m²/g.

10. The electrode according to claim 1, wherein a thickness of the primer layer is 300 nm to 1.5 *µ*m.

11. The electrode according to claim 1, wherein the granules included in the electrode active material layer are made by a method including the steps of:
mixing the electrode active material and the electrode binder with a dispersant to prepare a slurry; and
spray drying the slurry.

12. The electrode according to claim 11, wherein the slurry further comprises an electrode conductive material.

13. The electrode according to claim 1, wherein the electrode is a dry electrode manufactured by a method including the steps of:
distributing the plurality of granules on the current collector; and
rolling the plurality of distributed granules to form the electrode active material layer.

14. An electrochemical device, comprising:
an electrode assembly comprising a positive electrode, a negative electrode and a separator interposed between the positive electrode and the negative electrode and a battery case accommodating the electrode assembly together with a lithium containing nonaqueous electrolyte,
wherein at least one of the positive electrode and the negative electrode is the electrode according to any one of claims 1 to 13.
